# EUROPÄISCHE PATENTSCHRIFT

(11) **EP 0 591 718 B1**
(45) Veröffentlichungstag und Bekanntmachung des Hinweises auf die Patenterteilung: **02.01.1997**
(21) Anmeldenummer: 93114790.4
(22) Anmeldetag: 15.09.1993
(51) Int. Cl.: B62D 21/15, B62D 21/02, B60R 19/56

(54) **Nutzfahrzeug, insbesondere Frontlenker-Lastkraftwagen mit Rundum-Knautschzonen**
Commercial vehicle, especially a cab over lorry engine with all-round crumple zone
Véhicule utilitaire, notamment un camion à cabine avancée, avec zone déformable autour

(30) Priorität: 09.10.1992 DE 4234143
(43) Veröffentlichungstag der Anmeldung: 13.04.1994
(73) Patentinhaber: MAN Nutzfahrzeuge Aktiengesellschaft, 80976 München (DE)
(72) Erfinder: Rieck, Gerhard, Dipl.-Ing., D-81247 München (DE); Mertens, Armin, D-80993 München (DE); Schmolly, Ingo, Dipl.-Ing. (FH), D-85757 Karlsfeld (DE)

(56) Entgegenhaltungen:
- CH-A- 301 316
- DE-A- 3 151 280
- DE-A- 3 312 446
- DE-A- 3 808 813
- DE-A- 4 112 372
- DE-B- 1 077 992
- DE-C- 931 513
- FR-A- 2 214 281
- FR-A- 2 453 755
- US-A- 1 894 602

## Beschreibung

Die Erfindung betrifft ein Nutzfahrzeug, insbesondere Frontlenker-Lastkraftwagen, mit Merkmalen der im Oberbegriff des Anspruchs 1 angegebenen Art.

Bei Nutzfahrzeugen sind Unterfahrschutzeinrichtungen front- und werkseitig sowie seitlich zwischen Vorder- und Hinterachsen Vorschrift. Heckseitig ist hierzu eine Rammschutzleiste vorgesehen, die über stabile Abstandshalter am Rahmen befestigt ist. An den Nutzfahrzeug-Längsseiten sind zwischen den Vorder-und Hinterachsen Unterfahrschutzleisten gegeben, die über stabile Halter am Rahmen abgestützt sind. Auch der vordere Stoßfänger ist in der Regel fest am Rahmen befestigt. Aus Sicht dieser Konstruktionen ergibt sich im Falle des Aufpralls eines Pkw im Bereich der Unterfahrschutzeinrichtungen, daß diesem nutzfahrzeugseitig ein praktisch starrer Aufprallkörper entgegensteht, was je nach Aufprallgeschwindigkeit zu mehr oder weniger starken Beschädigungen am aufprallenden Pkw und hohem Verletzungsrisiko der Pkw-Insassen führt. Die nutzfahrzeugseitig stabile Anordnung der Unterfahrschutzeinrichtungen war dabei auch aus Sicht dessen notwendig, weil es damit galt, insbesondere die im Raum hinter den front- und heckseitigen Stoßfängern sowie seitlichen Unterfahrschutzleisten am Rahmen befestigten Fahrzeugteile/Aggregate im Falle eines Pkw-Aufpralls gegen Beschädigungen zu schützen.

Es ist nur zwar schon bekannt- siehe beispielsweise DE 38 08 812 A1 und DE 38 08 813 A1 - an einem Nutzfahrzeug frontseitig einen Stoßfänger vorzusehen, der in Rahmen-Längsrichtung beweglich ist. Dieser Stoßfänger ist bei der erstgenannten Offenlegungsschrift dahingehend ausgebildet, daß ein aufprallender Pkw zur Seite hin abgeleitet werden kann. Bei der zweitgenannten Offenlegungsschrift ist eine Vorrichtung vorgesehen, mit der der Stoßfänger zur Verlängerung des Verformungsweges bei einem Pkw-Aufprall in Richtung der Fahrzeuglängsachse nach vorne ausfahrbar und/oder schwenkbar ausgestaltet ist. Beide Lösungen erfordern einen Aktivmechanismus zur Bewegungs-Steuerung des Stoßfängers. Ein solcher Aktivmechanismus mit Steuerung ist relativ teuer und setzt im Bereich hinter dem Stoßfänger auch entsprechend viel Platz für die Anlenkung der nötigen Betätigungsorgane voraus.

Aus der DE-A-41 12 372 sind Mittel für einen seitlichen Unterfahrschutz bekannt. In die Halterungen von Unterfahrschutzplatten sind dabei elastische Zwischenstücke integriert.

Ferner ist aus der FR-A-24 53 755 eine Unterfahrschutzeinrichtung bekannt, von der die Erfindung, wie im Oberbegriff des Anspruches 1 angegeben, ausgeht. Diese Unterfahrschutzeinrichtung umfaßt eine Stoßstange, die unten an Tragarmen befestigt ist, die wiederum oben an geeigneten Stellen des Lkw-Rahmens gelagert und rotarisch um diese Lagerstellen verschwenkbar sind. Außerdem ist diese Stoßstange an Stoßdämpfern angeschlossen, die bei Aufprall eines Pkw die Energie absorbieren.

Es ist demgegenüber Aufgabe der Erfindung, ein Nutzfahrzeug der eingangs genannten Art dahingehend auszubilden, daß an einem Pkw bei einer Kollision mit dem Nutzfahrzeug im Bereich der Unterfahrschutzeinrichtungen die Folgeschäden geringer als bisher sind, trotzdem aber Beschädigungen von nutzfahrzeugseitig gegebenen Aggregaten/Anbauteilen weitestgehend vermeidbar oder begrenzbar sind.

Diese Aufgabe ist bei einem Nutzfahrzeug der gattungsgemäßen Art durch die im Kennzeichen des Anspruches 1 angegebenen Maßnahmen gelöst.

Vorteilhafte Ausgestaltungen dieser Lösung sind in den Unteransprüchen angegeben.

Es werden mithin erfindungsgemäß am Nutzfahrzeug bauteilfreie bzw. -arme vordere, hintere und seitliche Knautschzonen geschaffen. Die Erfindung setzt dabei bereits an einer entsprechenden Gestaltung des Rahmens an, im Bereich des Nutzfahrzeug-Vorderteiles und der dort gegebenen Rahmenlängsträger-Endbereiche dahingehend, daß im vorderen Bereich des Nutzfahrzeugs eine bauteil- bzw. aggregatfreie oder zumindest bauteilarme mit dann aber längsweich befestigten Bauteilen bzw. Aggregaten ausgestattete vordere Knautschzone gegeben ist. Dadurch ist sichergestellt, daß kein Bauteil bzw. Aggregat bei einer Frontalkollision des Nutzfahrzeuges mit einem Pkw ein starres Hindernis bilden kann. Außerdem ist dadurch, daß jeder der beiden Rahmen-Längsträger an seinem vorderen Endbereich vertikal gegabelt ist, wobei das untere Gabel-Teil vorne über einen oder mehrere in Höhe einer Pkw-Stoßstange angeordnete(n) Energieabsorber den vorderen Stoßfänger trägt, dagegen das obere Gabel-Teil der Gabelung in einer etwas über dem Normal-Niveau einer Pkw-Motorhaube gegebenen Höhe endet, sichergestellt, daß ein frontal aufprallender Pkw in den Frontbereich des Nutzfahrzeuges in die dort gegebene Knautschzone eintauchen kann und dabei vom Stoßfänger über den/die dahinter angeordneten Energieabsorber energieverzehrend abgefangen wird. Dadurch, daß außerdem jeder Längsträger etwa ab der Fahrerhaus-Rückwand nach hinten in zwei beabstandet übereinander angeordnete Längsträger-Teile aufgeteilt ist, an denen stabile Halter für die, die seitlichen Unterfahrschutzschilde tragenden Energieabsorber angeschlossen sind, ist sichergestellt, daß ein seitlich auf einen Unterfahrschutzschild aufprallender Pkw in diese seitliche Nutzfahrzeug-Knautschzone eintauchen kann und dabei durch die energieverzehrenden Energieabsorber weich abgefangen wird. Da Bauteile wie Batteriekästen, Staukästen, Druckluft- und/oder Kraftstoffbehälter und dergleichen nur im Quererstreckungsbereich der Halter angeordnet sind, ist eine Beschädigung der solchermaßen angeordneten Bauteile zumindest weitestgehend vermeidbar. Dadurch, daß heckseitig die Rahmen-Längsträger nach unten gezogen sind und an den dortigen Enden der/die einen hinteren Stoßfänger wie Rammschutzleiste tragende(n) Energieabsorber angeschlossen sind, ist auch bei einem heckseitigen Aufprall eines Pkw dieser beim Eintauchen in die heckseitige Knautschzone weich über den/die nachgiebigen, energieverzehrenden Energieabsorber abfangbar. Dadurch, daß zumindest die meisten Energieabsorber in Höhe einer Pkw-Stoßstange angeordnet sind, ist bei einem Aufprall eines Pkw eine sehr exakte Kraftwirklinie zwischen den nutzfahrzeugseitig und Pkw-seitig energieverzehrenden Organen gegeben. Die Auswirkungen eines Aufpralles sind somit beidseitig einigermaßen klar definierbar im Hinblick auf die Verformung des Pkw- und nutzfahrzeugseitigen Knautschzonenbereiches.

Nachstehend ist die erfindungsgemäße Lösung anhand mehrerer in der Zeichnung dargestellter Ausführungsbeispiele näher erläutert. In der Zeichnung zeigen:
- Fig. 1 bis 3: in Seitenansicht weitgehend schematisiert je ein gemäß der Erfindung konzipiertes Nutzfahrzeug der Frontlenker-Bauart ohne Auf- und Anbauten und ohne seitliche Unterfahrschutzschilde,
- Fig. 4 und 5: weitgehend schematisiert in Draufsicht je eine Heckbereichsvariante des Nutzfahrzeugs,
- Fig. 6 bis 9: je eine Querträger-Variante für die aufgelösten Längsträger-Abschnitte, und
- Fig. 10 bis 12: je einen Querschnitt durch das Fahrzeug gemäß Fig. 1 bis 3 mit angebauten seitlichen Unterfahrschutzschilden.

In den Figuren sind gleiche bzw. einander entsprechende Bauteile mit gleichen Bezugszeichen angezogen.

Das Nutzfahrzeug weist ein Fahrgestell 1 auf, dessen Rahmen aus zwei über Querträger verbundenen, im wesentlichen baugleich ausgebildeten Längsträgern 2, 3 besteht. Zwischen beiden Längsträgern 2, 3 und getragen von diesen ist ein Antriebsaggregat 4 angeordnet. Außerdem wird von den beiden Längsträgern 2, 3 ein Fahrerhaus 5 über je einen vorderen und hinteren Lagerbock 6 bzw. 7 getragen.

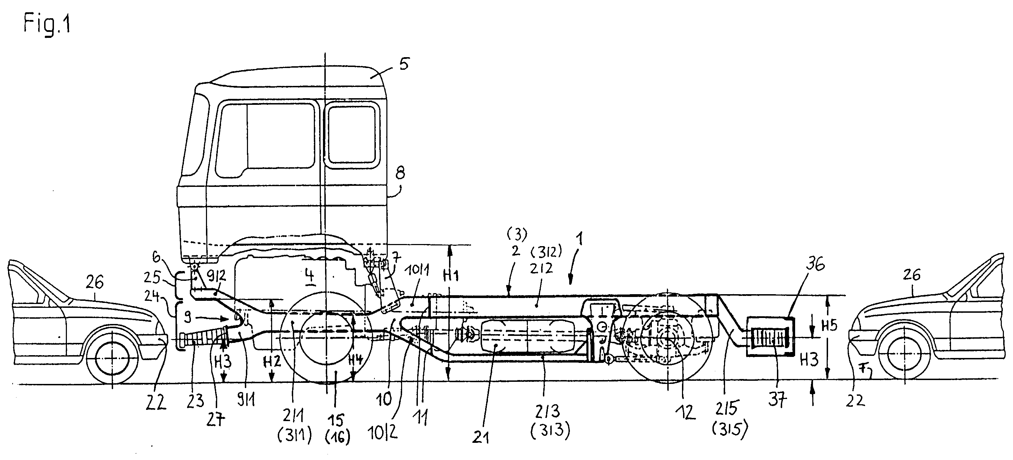

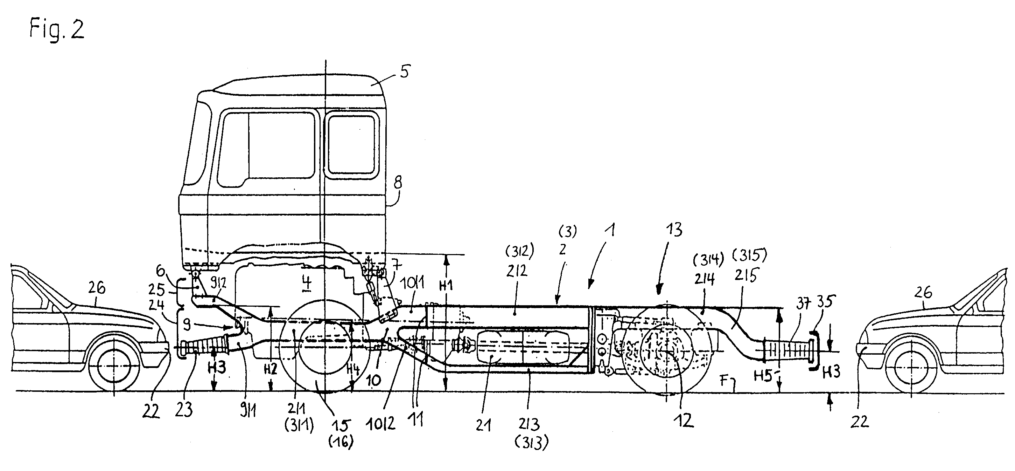

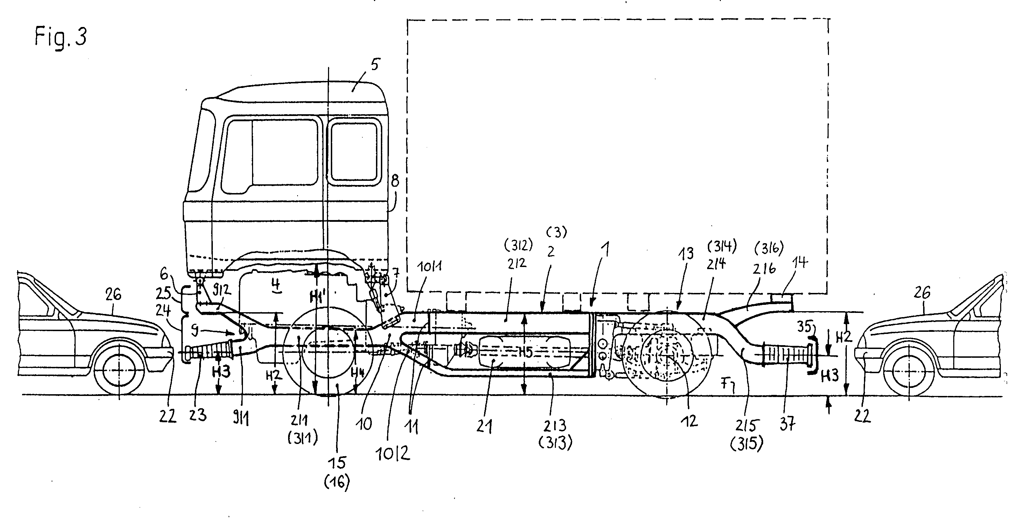

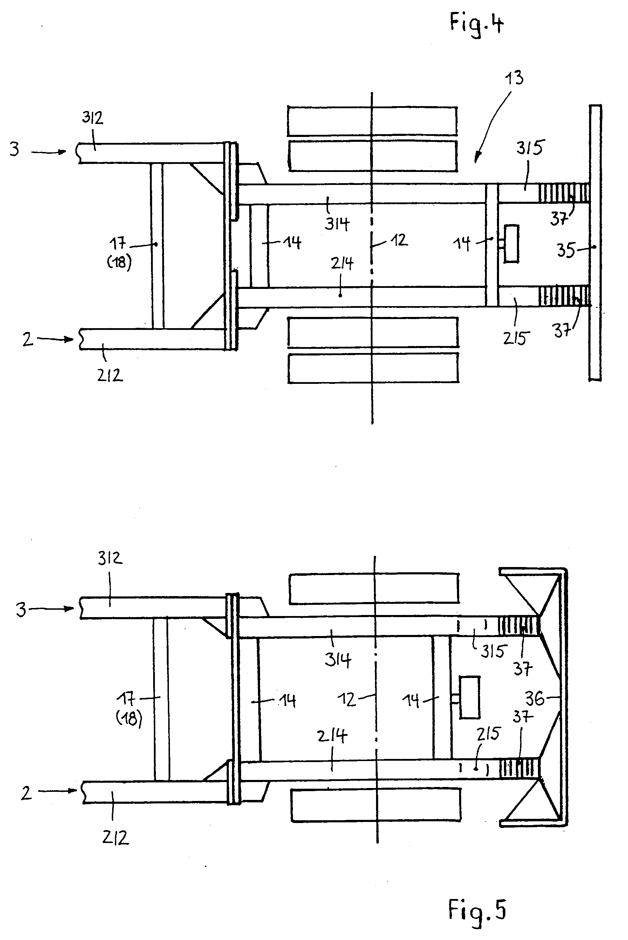

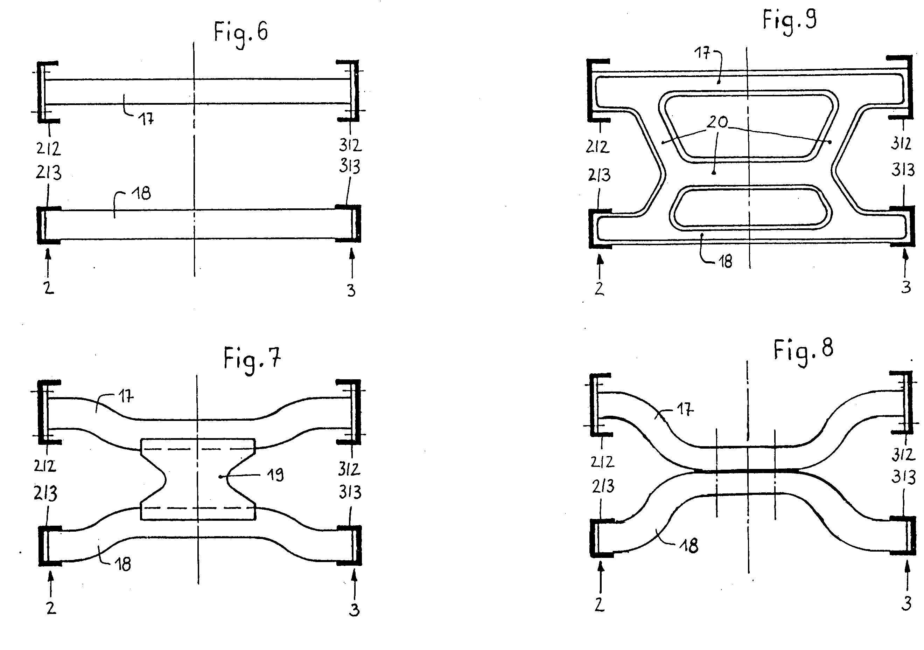

Jeder der beiden Längsträger 2, 3 weist einen sich im wesentlichen unter dem Fahrerhaus bis etwa zu dessen Rückwand 8 erstreckenden vorderen Längsträger-Abschnitt 2/1, 3/1 mit einer vorderen Vertikalgabelung 9 und einer hinteren Vertikalgabelung 10 auf. Außerdem ist jeder der beiden Längsträger 2, 3 im Anschluß an den vorderen Abschnitt 2/1, 3/1, mithin also etwa ab der Fahrerhaus-Rückwand 8 in ein oberes Längsträger-Teil 2/2, 3/2 und davon beabstandetes sowie im wesentlichen parallel laufendes unteres Längsträger-Teil 2/3, 3/3 aufgelöst. Dabei schließt sich das obere Teil 2/2, 3/2 am jeweils oberen Gabel-Teil 10/1 der Vertikalgabelung 10 und das untere Teil 2/3, 3/3 am jeweils unteren Gabel-Teil 10/2 der Vertikalgabelung 10 an. Dieses Anschließen kann durch Anschrauben, Annieten oder Anschweißen geschehen, die betreffenden Anschlußstellen sind in Fig. 1 bis 3 mit 11 angegeben. Das Maß zwischen Fahrbahn und Oberkante oberem Längsträger-Teil 2/2, 3/2 ist in den Fig. 1 bis 3 mit H5 angegeben, welches Maß der üblichen Höhe eines Nutzfahrzeug-Rahmens entspricht. Das obere Längsträger-Teil 2/2, 3/2 kann dabei entweder, wie aus Fig. 1 ersichtlich, nach hinten bis zum Ende des Rahmen geführt sein oder, wie aus Fig. 2 und 3 ersichtlich ebenso wie das untere (2/3, 3/3) vor der (ersten, vorderen) Hinterachse 12 enden. Die Versionen gemäß Fig. 2 und 3 haben den Vorteil, daß das Fahrgestell-Heck 13 als weitestgehend vormontierter Modul, bestehend aus Rahmenende mit Hinterachse(n) 12 und weiteren Anbauteilen, am davor gegebenen Fahrgestell-Abschnitt anschließbar ist. Dies hat zudem den Vorteil, daß im Fahrgestell-Heck 13 - wie gut aus einem Vergleich von Fig. 4 mit Fig. 5 ersichtlich - das aus zwei über wenigstens einen Querträger 14 miteinander verbundenen Längsträger-Abschnitten 2/4, 3/4 bestehende Rahmen-Hinterteil auf unterschiedliche Längen und Breiten auslegbar und damit bestens an die verschiedensten Nutzfahrzeug-Typen bzw. -Einsatzzwecke anpaßbar ist.

Die vorderen Längsträger-Abschnitte 2/1, 3/1 der beiden Längsträger 2,3 können im Bereich zwischen den Vertikalgabelungen 9, 10 zur Bildung eines - von vorn gesehen - V-förmigen Einbaubereiches für das Antriebsaggregat 4 in sich von der Vertikalen abweichend zumindest partiell schräg gestellt sein. Dadurch sind diese mittleren Bereiche der vorderen Längsträger-Abschnitte 2/1, 3/1 obergurtseitig weiter voneinander beabstandet als untergurtseitig, was einen tieferen Einbau des Antriebsaggregates 4 und damit einhergehend auch einen entsprechend abgesenkten Anbau des Fahrerhauses 5 am Rahmen 1 ermöglicht. Eine noch größere Absenkung des Antriebsaggregates 4 und gegebenenfalls auch des Fahrerhauses 5 ist dann möglich, wenn der Mittelabschnitt der vorderen Längsträger-Abschnitte 2/1, 3/1 auch noch - wie aus Fig. 1 bis 3 ersichtlich - gegenüber der im hinteren Fahrgestell-Bereich gegebenen Rahmen-Höhe H5 abgesenkt wird, und zwar auf ein Höhen-Niveau H4, das 0,6 - 0,9 H5 beträgt.Dadurch ist das Antriebsaggregat 4 um ein entsprechendes Differenzmaß (0,4 - 0,1 H5) tiefer gelegt zwischen den beiden Rahmen-Längsträgern 2, 3 und ebenso das Fahrerhaus 5 um ein entsprechendes Differenzmaß tiefer gesetzt am Rahmen 1 anbaubar, wobei sich dann zwischen Fahrerhaus-Boden 6 und Fahrbahn F ein in der Zeichnung mit H1 angegebenes, reduziertes Abstands-Maß ergibt. Außerdem kann der Mittelabschnitt der vorderen Längsträger-Abschnitte 2/1, 3/1 auch mit Aus- und Einbuchtungen versehen sein, die einen direkten (ohne Lagerböcke und dergleichen) Anschluß von Einzelradaufhängungsorganen für die Vorderräder 15, 16 ermöglichen.

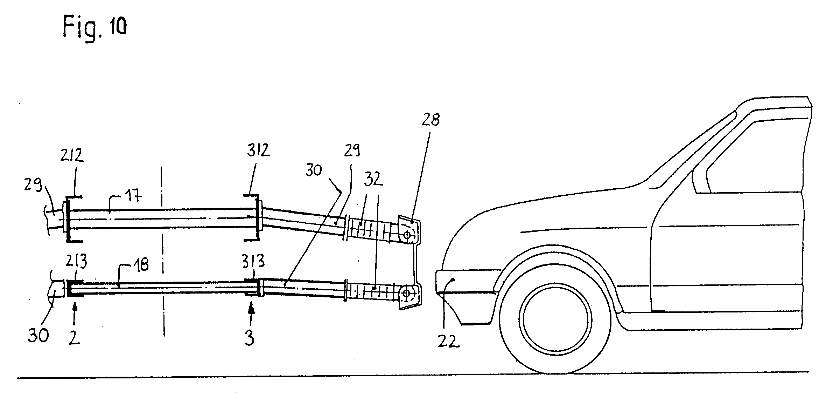

Die beiden Längsträger 2, 3 sind generell über an geeigneten Stellen angebrachte Querträger miteinander verbunden. Die Figuren 6 bis 9 zeigen verschiedene Querträgerkonstruktionen für die Verbindung in jenem mittleren Bereich auf, in dem die Längsträger 2, 3 zweigeteilt sind. Dabei können gerade oder gekröpfte, endseitig gegebenenfalls mit Anschlußflanschen versehene Querträger 17, 18 vorgesehen sein, die nicht (siehe Fig. 6) oder über ein Zwischenstück 19 (siehe Fig. 7) oder mittig direkt (siehe Fig. 8) miteinander verbunden sind und an denen die Längsträger-Teile jeweils endseitig angeschraubt, angenietet oder angeschweißt sind. Bei der Ausführungsform gemäß Fig. 9 sind die Querträger 17, 18 zusammen mit diese verbindenden Verstrebungen 20 durch ein Blechpreßteil realisiert, an das die Längsträger-Teile entweder angeschraubt, angenietet oder angeschweißt sind.

Wie aus den Darstellungen gemäß Fig. 1 bis 3 ersichtlich, kann das untere Teil 2/3 bzw. 3/3 eines Längsträgers 2, 3 im zweigeteilten Abschnitt soweit nach unten verlegt sein, daß zwischen beiden Längsträger-Teilen 2/2, 2/3 bzw. 3/2, 3/3 ein Ersatzrad 21 quer und/oder andere Fahrzeugteile wie Kraftstofftanks, Druckluftvorratsbehälter, Batteriekästen, Staukästen und dergleichen einbaubar sind.

Generell weist das Nutzfahrzeug in seinem vorderen Bereich, bei einem Frontlenker unterhalb des vorderen Teils des Fahrerhauses 4, eine bauteil- bzw. aggregatfreie oder - sofern dies nicht möglich ist - eine zumindest bauteilarme und dann nur mit längsweich (in Längsrichtung nachgiebig) am Rahmen befestigten Bauteilen bzw. Aggregaten ausgestattete Knautschzone auf. In deren Bereich kommen den vorderen Vertikalgabelungen 9 an den vorderen Längsträger-Abschnitten 2/1, 3/1 große Bedeutung zu, denn an deren unteren Gabel-Teilen 9/1 ist vorne über einen oder mehrere in Höhe H3 einer Pkw-Stoßstange 22 (siehe Fig. 1 bis 3 und 10 bis 12) angeordnete(n), in Rahmen-Längsrichtung nachgiebige(n) Energieabsorber 23 ein Stoßfänger 24 abgestützt. Das obere Gabel-Teil 9/2 dagegen ist als Träger und für die Befestigung von Fahrzeugteilen bzw. -aggregaten, wie Fahrerhaus 4 (über Lagerböcke 6, 7), Lenkgetriebe, Kühler, einem zweiten (oberen) Stoßfänger bzw. einer Frontverblendung 25 und dergleichen herangezogen. Außerdem enden die oberen Gabelteile 9/2 generell in einer etwas über dem Normalniveau einer Pkw-Motorhaube 26 gegebenen Höhe H2 und sind unterseitig so gestaltet, daß ein Pkw bei einer Kollision in diese so gegebene vordere Nutzfahrzeug-Knautschzone eintauchen kann. Dabei kann die Unterkante jedes der beiden oberen Gabel-Teile 9/2 in Längsrichtung (wie dargestellt) beispielsweise wenigstens soweit parallel zur Fahrbahn verlaufen, daß bei einer Kollision mit einem Pkw durch diesen eine Längs-Verschiebung des Stoßfängers 24 bis zur Enddeformation des/der Energieabsorber 16 gewährleistet ist. Die vorderen Enden der unteren Gabel-Teile 9/1 können durch eine Quertraverse 27 miteinander verbunden sein, die einerseits zur Erhöhung der Rahmen-Stabilität und andrerseits auch zur Verbesserung der Anschlußmöglichkeit für den/die Energieabsorber 23 dient. Der energieabsorbierende vordere Knautschzonen-Bereich des Nutzfahrzeuges kann auf verschiedene Weise realisiert sein. Beispielsweise kann der Stoßfänger 24 innen eine Querverstrebung aufweisen, an der der/die Energieabsorber 23 vorne abgestützt angeschlossen sind. Ferner ist es möglich, am jeweils unteren Gabel-Teil 9/1 einen eigenen Energieabsorber 23 anzuordnen. Alternativ hierzu ist es auch möglich, einen sich zumindest annähernd über die gesamte Länge/Fahrzeugbreite des Stoßfängers 24 hinter diesem erstreckenden Energieabsorber 23 in Blockform vorzusehen, der an den vorderen Enden der unteren Gabel-Teile 9/1 oder der Quertraverse 27 befestigt ist. Schließlich ist es auch möglich, daß der Stoßfänger 24 selbst als Energieabsorber ausgebildet oder als mit dem/den Energieabsor(n) 23 vorgefertigtes Bauteil an den vorderen Enden der unteren Gabelteile 9/1 bzw. der dort gegebenen Quertraverse 27 befestigt ist. Zur Realisierung des/der Energieabsorber 23 ist jedes Material oder jede Vorrichtung denkbar, mit der die Energie eines frontal am Stoßfänger 24 aufprallenden Pkw, z. B. progressiv über den Weg gesehen verzehrbar ist.

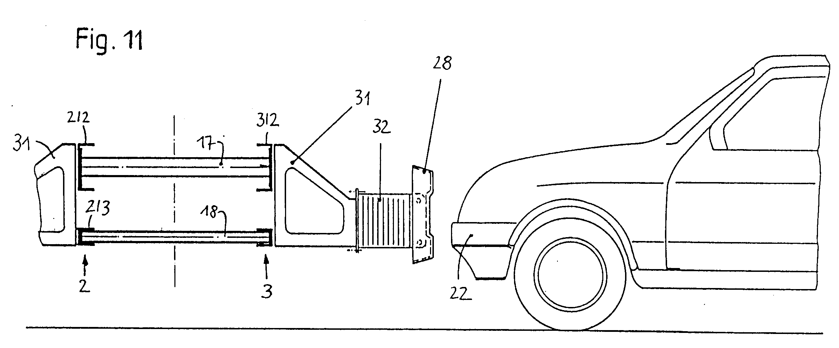

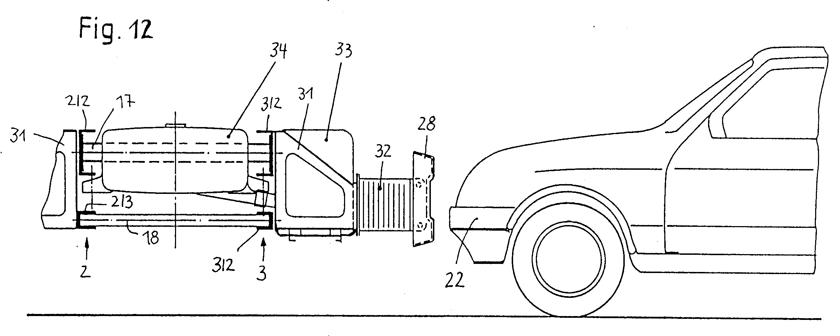

Darüber hinaus kommt auch der erfindungsgemäßen Auflösung der beiden Rahmen-Längsträger 2, 3 im Bereich hinter dem Fahrerhaus 5 in je zwei Teile 2/2, 2/3 bzw. 3/2, 3/3 im Hinblick auf den seitlichen Unterfahrschutz insofern große Bedeutung zu, als sich diese hervorragend für eine äußerst günstige Anordnung und Abstützung von dem seitlichen Unterfahrschutz dienenden Organen eignet. Verschiedene Ausführungsbeispiele hierzu sind in den Fig. 10 bis 12 dargestellt. Dabei sind an beiden Teilen 2/2, 2/3 bzw. 3/2, 3/3 der beiden Rahmen-Längsträger 2, 3 Halter 29, 30 (Fig. 10) bzw. 31 (Fig. 11, 12) angebracht, die über Energieabsorber 32 seitliche Unterfahrschutzschilde 28 tragen. Die Halter 29, 30 sind im Fall gemäß Fig. 10 stabförmig, in sich stabil ausgebildet und ragen seitlich von den sie tragenden Längsträger-Teilen 2/2, 2/3 bzw. 3/2, 3/3 ab. Bei der Ausführungsform gemäß Fig. 11 und 12 sind die Halter 31 durch einen geschlossenen, in sich stabilen Rahmen gebildet, der mit seiner Basis vertikal an beiden Teilen 2/2, 2/3 bzw. 3/2, 3/3 eines Längsträgers 2, 3 abgestützt und befestigt ist. Die Energieabsorber 32 sind zumindest teilweise in Höhe H3 einer Pkw-Stoßstange 22 angeordnet und machen es daher möglich, daß ein Seitenaufprall eines Pkw, wie in den Fig. 10 bis 12 dargestellt, besonders günstig, weil energieverzehrend, abfangbar ist. Durch eine entsprechende Ausgestaltung der Halter 29, 30, 31 mit einer seitlich auskragenden Länge, die größer als ebenfalls seitlich an den Längsträger-Teilen 2/2, 2/3 bzw. 3/2, 3/2 befestigte Fahrzeugteile 33 wie Kraftstoff- und/oder Druckluftbehälter, Batteriekästen, Staukästen und dergleichen ist, sind letztere auch bei einem seitlichen Aufprall eines Personenkraftwagens relativ gut gegen etwaige Beschädigungen gesichert.

Im übrigen macht die Zweiteilung der beiden Längsträger 2, 3, wie ebenfalls aus Fig. 12 ersichtlich, eine besonders geschützte Unterbringung von zusätzlichen Fahrzeugteilen 34 wie Kraftstoff- und/oder Druckluftbehältern und dergleichen im Bereich zwischen beiden zweigeteilten Längsträgern 2, 3 möglich.

Die Energieabsorber 32 können in Verbindung mit den Haltern 29, 30, 31 durch jede geeignete Vorrichtung, z.B. Zylinder/Kolben-Konstruktionen, oder durch frontseitig an festen Stäben angeordnetes energieabsorbierendes Material gebildet sein. Dabei kann auch dieses energieabsorbierende Material stabförmig sein, oder sich in Blockform, mehrere Halter miteinander verbindend, ausgebildet und am Unterfahrschutzschild 28 abgestützt angeschlossen sein. Vorzugsweise ist jeder der je Fahrzeugseite vorgesehenen Unterfahrschutzschilde 28 als großflächige, in sich profilierte und auch im Hinblick auf eine aerodynamische günstige Seitenverkleidung des Fahrzeugs ausgebildete Platte realisiert.

Darüberhinaus ist auch das Nutzfahrzeugheck mit einer bauteil- bzw. aggregatfreien bzw. -armen Knautschzone ähnlich wie frontseitig ausgestattet. Dies ist aus Fig. 1 bis 3 in Verbindung mit Fig. 4 und 5 ersichtlich. Dabei sind die hinteren Enden der Längsträger-Abschnitte 2/2, 3/2 bzw. 2/4, 3/4 bis auf Höhe H3 einer Pkw-Stoßstange 22 nach unten gezogen, durch Abkröpfen (siehe Fig. 3 und 5) oder Anschweißen (siehe Fig. 1, 2 und 4) entsprechender Träger-Teile. Der heruntergezogene Träger-Abschnitt ist mit 2/5 bzw. 3/5 bezeichnet. Eine Rammschutzleiste 35 (siehe Fig. 2, 3, 4) oder eine das Heck aerodynamisch umgebende, in sich stabile Verkleidungsblende 36 (siehe Fig. 1 und 5) ist dabei über wenigstens einen in Längsrichtung nachgiebigen, in Höhe H3 der Pkw-Stoßstange 22 angeordneten Energieabsorber 37 an den hinteren Enden der heruntergezogenen Längsträger-Abschnitte 2/5, 3/5 abgestützt. Darüber hinaus kann das hintere Rahmenende ähnlich dem vorderen Rahmenende ausgestaltet, das heißt, mit einer Gabelung - wie aus Fig. 3 ersichtlich - versehen sein. Diese Gabelung besteht dann aus den heruntergezogenen Träger-Abschnitten 2/5, 3/5 und hochgezogenen Träger-Abschnitten 2/6, 3/6. Letztere sind untenseitig mindestens bis auf Höhe H2 einer Pkw-Motorhaube 26 hochgezogen und so gestaltet, daß ein Pkw bei einem Heckaufprall unter Längsverschiebung der Rammschutzleiste 36 bzw. Verkleidungsblende 37 in diese so konstruktiv vorgegebene hintere Nutzfahrzeug-Knautschzone eindringen, wobei die Aufprall-Energie durch den/die nachgiebigen Energieabsorber 37 verzehrt wird. Der/die hintere Energieabsorber 37 kann/können in Verbindung mit der Rammschutzleiste 35 oder Verkleidungsblende 36 in gleicher Weise realisiert sein wie der/die frontseitig hinter dem Stoßfänger 24 gegebene(n) Energieabsorber 23.

Die oberen Träger-Abschnitte 2/6, 3/6 sind über einen Querträger 14 miteinander verbunden, der oben zur Befestigung von (in Fig. 3 gestrichelt dargestellten) Fahrzeugaufbauten, wie Pritsche, Planen- oder Kofferaufbau und dergleichen, sowie rückseitig zum Anbau von außerhalb der Knautschzone gegebenen Fahrzeugteilen wie Rückleuchten und dergleichen dient.

Die heckseitigen Längsträger-Abschnitte mit ihren Teilen 2/4, 2/5, 2/6 bzw. 3/4, 3/5, 3/6 können im Fall gemäß Fig. 3 durch ein einteiliges Blechpreßteil oder als Schweißkonstruktion aus einzeln vorgefertigten Teilen hergestellt werden. Wenn sich dagegen das Längsträger-Teil 2/2, 3/2 - wie im Fall gemäß Fig. 1 - über die Hinterachse(n) 12 hinaus nach hinten erstreckt, dann kann die endseitige Gabelang mit ihren Teilen 2/5, 2/6 bzw. 3/5, 3/6 entweder zusammen mit dem Längsträger-Teil 2/2 bzw. 3/2 als einstückiges Blechpreßteil oder durch eine Schweißkonstruktion aus vorgefertigten Einzelteilen realisiert sein.

## Patentansprüche

1. Nutzfahrzeug, insbesondere Frontlenker-Lastkraftwagen, mit einem Fahrgestell (1), dessen Rahmen aus zwei über Querträger verbundenen Längsträgern (2, 3) besteht, und das mit Unterfahrschutzeinrichtungen (24, 28, 35, 36) ausgestattet ist, die fahrzeugeinwärts nachgiebig gelagert und an Energieabsorber (23, 32, 37) angeschlossen sind, die bei Aufprall eines Pkw nachgeben und die Aufprallenergie verzehren, dadurch gekennzeichnet, daß der Rahmen (1) des Fahrzeuges mit nach unten bis etwa in die Höhe (H3) einer Pkw-Stoßstange (22) verlagerten Rahmenteilen (9/1; 2/3, 3/3, 2/5, 3/5) ausgestattet ist, an denen über stabile Halter (2/5, 3/5, 9/1, 29, 30, 31) mit in Höhe (H3) der Pkw-Stoßstange (22) angeordneten Energieabsorbern (23, 32, 37) die Unterfahrschutzeinrichtungen des Fahrzeuges-frontseitiger und heckseitiger Stoßfänger (24, 35, 36) sowie auch seitliche Unterfahrschutzschilde (28) - abgestützt angeordnet sind, und daß zwischen den frontseitigen, heckseitigen und seitlichen Unterfahrschutzeinrichtungen (24, 28, 35, 36) und dem Rahmen des Fahrzeuges, dort im Verformungsbereich der Energieabsorber und außerhalb des Erstreckungsbereiches der Halter (23, 32, 37) Knautschzonen gegeben sind, in deren Bereich
- ein aufprallender Pkw eintauchen kann,
- die Energieverzehrung durch den/die in Aufprallrichtung nachgiebigen Energieabsorber (23, 32, 37) erfolgt, und
- keine Bauteile bzw. Aggregate oder wenn doch, dann nur in Aufprallrichtung nachgiebig, angeordnet sind.

2. Nutzfahrzeug nach Anspruch 1, dadurch gekennzeichnet, daß im Bereich der frontseitig des Nutzfahrzeuges, insbesondere unter dem vorderen Bereich des Fahrerhauses (5) gegebenen Knautschzone jeder der beiden Rahmen-Längsträger (2, 3) an seinem vorderen Endbereich eine Vertikal-Gabelung (9) aufweist, an deren unterem Gabel-Teil (9/1) vorne über einen oder mehrere in Höhe (H3) einer Pkw-Stoßstange (22) angeordnete(n), in Rahmen-Längsrichtung nachgiebige(n) Energieabsorber (23) der frontseitige Stoßfänger (24) abgestützt ist, während das obere Gabel-Teil (9/2) als Träger für Fahrzeugteile bzw. -aggregate, wie vordere Fahrerhauslager (6), Lenkgetriebe, Kühler, oberer Stoßfänger oder Frontverblendung (25) und dergleichen herangezogen ist sowie in einer etwas über dem Normalniveau einer Pkw-Motorhaube (26) gegebenen Höhe (H2) endet und unterseitig so gestaltet ist, daß ein Pkw bei einer Kollision in diese so gegebene vordere Nutzfahrzeug-Knautschzone unter Längsverschiebung des Stoßfängers (24) bis zur Enddeformation des/der Energieabsorber (23) eintauchen kann.

3. Nutzfahrzeug nach Anspruch 2, dadurch gekennzeichnet, daß die Unterkante des oberen Gabel-Teiles (9/2) in Längsrichtung wenigstens soweit parallel zur Fahrbahn verläuft, daß bei einer Kollision mit einem Pkw durch diesen eine Verschiebung des Stoßfängers (24) in Rahmen-Längsrichtung bis zur Enddeformation des/der Energieabsorber (23) gewährleistet ist.

4. Nutzfahrzeug nach einem der Ansprüche 2 und 3, dadurch gekennzeichnet, daß am unteren Gabel-Teil (9/1) der Vertikal-Gabelung (9) jedes Rahmen-Längsträgers (2, 3) ein eigener Energieabsorber (23) abgestützt ist.

5. Nutzfahrzeug nach einem der Ansprüche 2 und 3, dadurch gekennzeichnet, daß die unteren Gabel-Teile (9/1) der Vertikal-Gabelung (9) beider Rahmen-Längsträger (2, 3) einen an ihnen frontseitig angeschlossenen und sich zumindest annähernd über die gesamte Länge/Fahrzeugbreite des Stoßfängers (24) hinter diesem erstreckenden Energieabsorber (23) tragen.

6. Nutzfahrzeug nach einem oder mehreren der Ansprüche 2 bis 5, dadurch gekennzeichnet, daß die vorderen Enden der unteren Gabel-Teile (9/1) der Rahmen-Längsträger (2, 3) durch eine Quertraverse (27) miteinander verbunden sind, an der der/die Energieabsorber (23) befestigt ist/sind.

7. Nutzfahrzeug nach Anspruch 2, dadurch gekennzeichnet, daß der Stoßfänger (24) selbst als Energieabsorber ausgebildet oder als mit dem/den Energieabsorber(n) (23) vorgefertigtes Bauteil an den vorderen Enden der unteren Gabelteile (9/1) bzw. einer dort gegebenen Quertraverse (27) befestigt ist.

8. Nutzfahrzeug nach einem der Ansprüche 1 bis 5, dadurch gekennzeichnet, daß der Stoßfänger (24) innen eine Querverstrebung aufweist, an der der/die Energieabsorber (23) angeschlossen ist/sind.

9. Nutzfahrzeug nach Anspruch 1, dadurch gekennzeichnet, daß jeder der beiden Rahmen-Längsträger (2, 3) etwa ab der Fahrerhaus-Rückwand (8) in ein oberes (2/2, 3/2) und davon ein beabstandetes unteres Längsträger-Teil (2/3, 3/3) aufgelöst ist, die vor der (ersten, vorderen) Hinterachse (9) miteinander verbunden sind und an denen außen jeweils Halterungen (29, 30, 31) für die die seitlichen, sich zwischen Vorderachse und (erster, vorderer) Hinterachse (12) erstreckenden Unterfahrschutzschilde (28) tragenden Energieabsorber (32) abgestützt und befestigt sind.

10. Nutzfahrzeug nach den Ansprüchen 2 und 9, dadurch gekennzeichnet, daß jeder der beiden Rahmen-Längsträger (2, 3) einen vorderen Träger-Abschnitt (2/3, 3/3) aufweist, an dem vorn die vordere Vertikalgabelung (9) gegeben ist, und der außerdem auch am hinteren Ende eine Vertikalgabelung (10) mit oberem Gabel-Teil (10/1), an dem sich das jeweils obere Längsträger-Teil (2/2 bzw. 3/2) anschließt, und unterem Gabel-Teil (10/2), an dem sich das jeweils untere Längsträger-Teil (2/3 bzw. 3/3) anschließt, aufweist.

11. Nutzfahrzeug nach Anspruch 10, dadurch gekennzeichnet, daß die Vertikalgabelungen (9, 10) jeweils an solchen vorderen Längsträger-Abschnitten (2/1, 3/1) gegeben sind, die im Bereich zwischen vorderer und hinterer Gabelung (9, 10) zur Tieferlegung des Antriebsaggregates (4) und des Fahrerhauses (5) zumindest partiell auf ein gegenüber dem Höhenniveau (H5) des oberen Längsträger-Teils (2/2, 3/2) niedrigeres Höhen-Niveau (H4 = 0,6 - 0,9 H5) abgesenkt und gegebenenfalls zur Bildung eines etwa V-förmigen Antriebsaggregat-Einbaubereiches in sich von der Vertikalen abweichend schräg gestellt sowie gegebenenfalls auch zum direkten Anschluß von Achsanlenkungs- bzw. Einzelradaufhängungsorganen mit entsprechenden Aus- und Einbuchtungen versehen sind.

12. Nutzfahrzeug nach einem der Ansprüche 10 bis 11, dadurch gekennzeichnet, daß jeder vordere Längsträger-Abschnitt (2/1, 3/1) zusammen mit vorderer und hinterer Gabelung (9, 10) als Blechpreßteil realisiert ist.

13. Nutzfahrzeug nach einem der Ansprüche 10 und 11, dadurch gekennzeichnet, daß jeder vordere Längsträger-Abschnitt (2/1, 3/1) durch eine aus vorgefertigten Einzelteilen zusammengesetzte Schweißkonstruktion realisiert ist.

14. Nutzfahrzeug nach einem der vorhergehenden Ansprüche, dadurch gekennzeichnet, daß das obere Gabel-Teil (9/2) der vorderen Gabelung (9) für die Befestigung von Fahrzeugteilen bzw. -aggregaten ausgebildet und/oder mit entsprechenden Befestigungsorganen, wie Lagerböcken und dergleichen ausgestattet ist.

15. Nutzfahrzeug nach Anspruch 10, dadurch gekennzeichnet, daß die beiden Teile (2/2, 2/3 bzw. 3/2, 3/3) jedes Rahmen-Längsträgers (2, 3) im aufgelösten Bereich mit größerem Abstand übereinander und in Längsrichtung im wesentlichen parallel verlaufend angeordnet und vorne mit dem zugehörigen Gabel-Teil (10/1, 10/2) der hinteren Vertikalgabelung (10) am vorderem Träger-Abschnitt (2/1, 3/1) über Schraub-oder Nietverbindungen verbunden sind.

16. Nutzfahrzeug nach Anspruch 15, dadurch gekennzeichnet, daß sich beide Teile (2/2, 2/3; 3/2, 3/3) jedes Rahmen-Längsträgers (2, 3) nach hinten nur bis vor die (erste, vordere) Hinterachse (12) erstrecken, und daß der Rahmen (1) nach hinten durch sich an den oberen Längsträger-Teilen (2/2, 3/2) anschließende, durch wenigstens einen Querträger (14) verbundene Längsträger-Teile (2/4, 2/5, 2/6; 3/4, 3/5, 3/6) vervollständigt ist.

17. Nutzfahrzeug nach Anspruch 15, dadurch gekennzeichnet, daß das obere Teil (2/2, 3/2) jedes Rahmen-Längsträgers (2, 3) sich über die Hinterachsanordnung (12) hinaus erstreckt, während das untere Längsträger-Teil (2/3, 3/3) jeweils vor der (ersten, vorderen) Hinterachse (9) endet und dort über einen Lagerschild, der zur Anlenkung von Hinterachsaufhängungsorganen dient, mit dem oberen Längsträger-Teil (2/2, 3/2) verbunden ist.

18. Nutzfahrzeug nach einem der Ansprüche 16 und 17, dadurch gekennzeichnet, die beiden Teile (2/2, 2/3; 3/2, 3/3) jedes Rahmen-Längsträgers (2, 3) unterschiedliche Querschnitte aufweisen, wobei das querschnittsstärkere wahlweise das untere oder obere sein kann.

19. Nutzfahrzeug nach einem Ansprüche 16 und 17, dadurch gekennzeichnet, daß beide Teile (2/2, 2/3 bzw. 3/2, 3/3) eines Rahmen-Längsträgers (2, 3) den gleichen Querschnitt haben.

20. Nutzfahrzeug nach einem oder mehreren der Ansprüche 9, 10 und 15 bis 19, dadurch gekennzeichnet, daß die seitlichen Unterfahrschutzschilde (28) jeweils durch obere (29), an den oberen Längsträger-Teilen (2/2, 3/2) abgestützt befestigte, und untere, an den unteren Längsträger-Teilen (2/3, 3/3) abgestützt befestigte, seitlich abragende stabförmige Halter (29, 30) sowie jeweils daran außen anschließende Energieabsorber (32) getragen werden.

21. Nutzfahrzeug nach einem der Ansprüche 9, 10 und 15 bis 19, dadurch gekennzeichnet, daß die seitlichen Unterfahrschutzschilde (28) jeweils durch aus einem geschlossenen Rahmen gebildete, mit ihrer Basis vertikal an beiden Teilen (2/2, 2/3 bzw. 3/2, 3/3) eines Rahmen-Längsträgers (2, 3) abgestützt befestigte Halter (31) und jeweils daran an anschließende Energieabsorber (32) getragen werden.

22. Nutzfahrzeug nach einem der Ansprüche 20 und 21, dadurch gekennzeichnet, daß jeder je Fahrzeug-Längsseite gegebene Unterfahrschutzschild (28) auch im Hinblick auf eine aerodynamisch günstige Seitenverkleidung des Fahrzeugs ausgebildet ist.

23. Nutzfahrzeug nach einem der Ansprüche 20 bis 22, dadurch gekennzeichnet, daß im Raum zwischen den Unterfahrschutzschilden (28) und den sie tragenden Längsträger-Teilen (2/2, 2/3 bzw. 3/2, 3/3) zu diesen hingerückt im nicht deformierbaren Bereich der Halter (29, 30, 31) Fahrzeugteile (30) wie Kraftstoff- und/oder Druckluftbehälter, Batteriekästen, Staukästen und dergleichen geschützt angeordnet sind.

24. Nutzfahrzeug nach den Ansprüchen 16 und 17, dadurch gekennzeichnet, daß die hinteren Enden der heckseitigen Längsträger-Abschnitte (2/4, 3/4) bis auf Höhe (H3) einer Pkw-Stoßstange nach unten gezogen sind, und daß an den hinteren Enden dieser heruntergezogenen Längsträger-Abschnitte (2/5, 3/5) eine Rammschutzleiste (35) oder eine das Heck aerodynamisch umgebende Verkleidungsblende (36) über wenigstens einen in Längsrichtung nachgiebigen Energieabsorber (37) abgestützt ist, somit bei einem Aufprall eines Pkw dieser in die solchermaßen gestaltete hintere Nutzfahrzeug-Knautschzone eindringen kann und dabei durch den/die Energieabsorber (37) die Aufprall-Energie verzehrbar ist.

25. Nutzfahrzeug nach Anspruch 24, dadurch gekennzeichnet, daß die hinteren Enden der heckseitigen Längsträger-Abschnitte (2/4, 3/4) bzw. der oberen Längsträger-Teile (2/2, 3/2) mit einer Gabelung versehen sind, wobei deren untere Gabel-Teile durch die heruntergezogenen Träger-Abschnitte (2/5, 3/5), die oberen Gabel-Teile dagegen durch hochgezogeneTräger-Abschnitte (2/6, 3/6) gebildet sind, deren Unterseite mindestens in Höhe (H3) einer Pkw-Stoßstange (22) endet und so gestaltet ist, daß ein Pkw bei einem Heckaufprall unter Längsverschiebung der Rammschuztleiste (35) bzw. der Verkleidungsblende (36) bis zur Enddeformation des/der Energieabsorber(s) (37) in diese so gestaltete heckseitige Nutzfahrzeug-Knautschzone eintauchen kann.

26. Nutzfahrzeug nach Anspruch 24, dadurch gekennzeichnet, daß das Nachunten-ziehen der hinteren Längsträger-Enden (2/5, 3/5) durch Abkröpfen derselben oder Einschweißen eines entsprechenden Träger-Teiles realisiert ist.

27. Nutzfahrzeug nach Anspruch 25, dadurch gekennzeichnet, daß die heckseitige Gabelung mit ihren Teilen (2/5, 2/6 bzw. 3/5, 3/6) zusammen mit dem davor gegebenen Längsträger-Teil (2/4, 3/4 bzw. 2/2, 3/2) als Blechpreßteil oder als Schweißkonstruktion realisiert ist.

## Claims

1. A commercial vehicle, particularly a forward control truck, having a chassis (1), the frame of which consists of two longitudinal members (2, 3) connected via transverse members, and which is equipped with under-ride protection devices (24, 28, 35, 36) that are mounted yieldingly inwards towards the vehicle and are connected to energy absorbers (23, 32, 37) which yield in the event of a collision with a car and absorb the energy of the collision, characterised in that the frame (1) of the vehicle is equipped with frame parts (9/1; 2/3, 3/3, 2/5, 3/5) moved downwards to approximately the height (H3) of a car bumper (22) on which the under-ride protection devices of the vehicle - front and rear bumpers (24, 25, 35, 36) and also lateral under-ride protection shields (28) - are arranged and supported via stable retainers (2/5, 3/5, 9/1, 29, 30, 31) with energy absorbers (23, 32, 37) arranged at the height (H3) of the car bumper (22), and that, between the front, rear and lateral under-ride protection devices (24, 28, 35, 36) and the frame of the vehicle, in the deformation region of the energy absorbers and outside the spanning range of the retainers (23, 32, 37), crumple zones are provided, in the region of which
- a colliding car can penetrate,
- the energy is absorbed by the energy absorber(s) (23, 32, 37) yielding in the direction of collision, and
- no components or units are arranged, or if such components or units are arranged, they only yield in the direction of collision.

2. A commercial vehicle according to claim 1, characterised in that, in the region of the crumple zone provided on the front of the commercial vehicle, particularly below the front region of the driver's cab (5), each of the two longitudinal frame members (2, 3) has a vertical bifurcation (9) at its front end region, the lower fork part (9/1) of which supports the front bumper (24) at the front via one or more energy absorber(s)(23) yielding in the longitudinal direction of the frame and arranged at the height (H3) of a car bumper (22), while the upper fork part (9/2) is used as a support for vehicle parts or units, such as the front driver's cab bearing (6), steering gear, radiator, upper bumper or front panelling (25) and the like, ends at a height (H2) provided slightly above the normal level of a car engine bonnet (26) and is designed on the underside so that, in the event of a collision, a car can penetrate into this thus provided front crumple zone of the commercial vehicle, the bumper (24) being displaced longitudinally until the final deformation of the energy absorber(s)(23) is reached.

3. A commercial vehicle according to claim 2, characterised in that the lower edge of the upper fork part (9/2) extends in the longitudinal direction parallel to the roadway at least to the extent that, in the event of a collision with a car, it guarantees displacement of the bumper (24) in the longitudinal frame direction until the final deformation of the energy absorber(s)(23) is reached.

4. A commercial vehicle according to one of claims 2 and 3, characterised in that a dedicated energy absorber (23) is supported on the lower fork part (9/1) of the vertical bifurcation (9) of each longitudinal frame member (2, 3).

5. A commercial vehicle according to one of claims 2 and 3, characterised in that the lower fork parts (9/1) of the vertical bifurcation (9) of both longitudinal frame members (2, 3) have an energy absorber (23) connected to their fronts and extending behind the bumper (24) at least approximately over the entire length / vehicle width of the bumper (24).

6. A commercial vehicle according to one or more of claims 2 to 5, characterised in that the front ends of the lower fork parts (9/1) of the longitudinal frame members (2, 3) are connected to one another via a transverse member (27) to which the energy absorber(s) (23) is/are fixed.

7. A commercial vehicle according to claim 2, characterised in that the bumper (24) is itself designed as an energy absorber or is fixed as a component prefabricated with the energy absorber(s) (23) to the front ends of the lower fork parts (9/1) or to a transverse member (27) provided at this point.

8. A commercial vehicle according to one of claims 1 to 5, characterised in that the bumper (24) has an internal cross-brace to which the energy absorber(s) (23) is/are connected.

9. A commercial vehicle according to claim 1, characterised in that, slightly away from the driver's cab rear wall (8), both of the two longitudinal frame members (2, 3) are divided into an upper (2/2, 3/2) and, at a distance therefrom, a lower longitudinal member part (2/3, 3/3) which are connected to one another in front of the (first, front) rear axle (9) and on the outside of which retainers (29, 30, 31) for the energy absorbers (32) having the lateral under-ride protection shields (28) extending between the front axle and the (first, front) rear axle (12) are supported and fixed.

10. A commercial vehicle according to claims 2 and 9, characterised in that both of the two longitudinal frame members (2, 3) have a front member section (2/3, 3/3), on the front of which is provided the front vertical bifurcation (9) and which also has, at the rear end, a vertical bifurcation (10) with an upper fork part (10/1) to which each upper longitudinal member part (2/2 or 3/2) is connected and a lower fork part (10/2) to which each lower longitudinal member part (2/3 or 3/3) is connected.

11. A commercial vehicle according to claim 10, characterised in that the vertical bifurcations (9, 10) are each provided on such front longitudinal member sections (2/1, 3/1) which, in the region between the front and rear fork (9, 10), are lowered at least partly to a height level (H4 = 0.6 - 0.9 H5) that is lower than the height level (H5) of the upper longitudinal member part (2/2, 3/2) in order to reduce the height of the drive unit (4) and the driver's cab (5), and are optionally positioned sloping away from the vertical in order to form between them an approximately V-shaped drive unit installation region and are optionally also provided with appropriate projections and recesses for directly connecting axle coupling or individual wheel suspension elements.

12. A commercial vehicle according to one of claims 10 to 11, characterised in that each front longitudinal member section (2/1, 3/1) is implemented together with the front and rear bifurcations (9, 10) as a pressed sheet metal part.

13. A commercial vehicle according to one of claims 10 and 11, characterised in that each front longitudinal member section (2/1, 3/1) is implemented by means of a welded structure composed of individual prefabricated parts.

14. A commercial vehicle according to one of the preceding claims, characterised in that the upper fork part (9/2) of the front bifurcation (9) is designed for fixing vehicle parts or units and/or is equipped with corresponding fixing elements, such as bearing blocks and the like.

15. A commercial vehicle according to claim 10, characterised in that, in the divided region, the two parts (2/2, 2/3 or 3/2, 3/3) of each longitudinal frame member (2, 3) are arranged at a greater distance above one another and extending substantially parallel in the longitudinal direction and are connected at the front with the associated fork part (10/1, 10/2) of the rear vertical bifurcation (10) on the front member section (2/1, 3/1) via bolted or riveted connections.

16. A commercial vehicle according to claim 15, characterised in that both parts (2/2, 2/3; 3/2, 3/3) of each longitudinal frame member (2, 3) extend backwards only as far as in front of the (first, front) rear axle (12), and that the frame (1) is completed at the back by longitudinal member parts (2/4, 2/5, 2/6; 3/4, 3/5, 3/6) adjoining the upper longitudinal member parts (2/2, 3/2) and connected by at least one transverse member (14).

17. A commercial vehicle according to claim 15, characterised in that the upper part (2/2, 3/2) of each longitudinal frame member (2, 3) extends beyond the rear axle arrangement (12), while each lower longitudinal member part (2/3, 3/3) ends in front of the (first, front) rear axle (9) where it is connected to the upper longitudinal member part (2/2, 3/2) via an end shield that serves to couple rear axle suspension elements.

18. A commercial vehicle according to one of claims 16 and 17, characterised in that both parts (2/2, 2/3; 3/2, 3/3) of each longitudinal frame member (2, 3) are of different cross-section, wherein the part with the larger cross-section may be the upper or the lower part as required.

19. A commercial vehicle according to one of claims 16 and 17, characterised in that both parts (2/2, 2/3; 3/2, 3/3) of a longitudinal frame member (2, 3) are of the same cross-section.

20. A commercial vehicle according to one or more of claims 9, 10 and 15 to 19, characterised in that each lateral under-ride protection shield (28) is supported by upper laterally-projecting rod-shaped retainers (29, 30) fixed to and supported by the upper longitudinal member parts (2/2, 3/2) and by lower laterally-projecting rod-shaped retainers (29, 30) fixed to and supported by the lower longitudinal member parts (2/3, 3/3), and by energy absorbers (32) connected to the outside thereof.

21. A commercial vehicle according to one of claims 9, 10 and 15 to 19, characterised in that each lateral under-ride protection shield (28) is supported by retainers (31) formed by a closed frame, the base of which is vertically supported on and fixed to both parts (2/2, 3/2 or 2/3, 3/3) of a longitudinal frame member (2, 3), and each is supported thereupon by adjoining energy absorbers (32).

22. A commercial vehicle according to one of claims 20 and 21, characterised in that each under-ride protection shield (28) provided on each longitudinal side of the vehicle is also designed with regard to providing an aerodynamically favourable side panelling for the vehicle.

23. A commercial vehicle according to one of claims 20 to 22, characterised in that vehicle parts (30), such as fuel and/or compressed air tanks, battery cases, accumulator cases and the like are protected and arranged in the space between the under-ride protection shields (28) and the longitudinal member parts (2/2, 3/2 or 2/3, 3/3) supporting them, inserted thereagainst in the non-deformable region of the retainers (29, 30, 31).

24. A commercial vehicle according to claims 16 and 17, characterised in that the rear ends of the rear-side longitudinal member sections (2/4, 3/4) are turned downwards to the height (H3) of a car bumper, and that, at the rear ends of these down-turned longitudinal member sections (2/5, 3/5), a crash protection bar (35) or a panelling screen (36) aerodynamically surrounding the tail is supported via at least one energy absorber (37) yielding in the longitudinal direction so that, in the event of a collision with a car, the car can penetrate into this thus-formed rear commercial vehicle crumple zone and the energy of collision is thereby absorbed by the energy absorber(s) (37).

25. A commercial vehicle according to claim 24, characterised in that the rear ends of the rear-side longitudinal member sections (2/4, 3/4) or the upper longitudinal member parts (2/2, 3/2) are provided with a bifurcation, wherein the lower fork parts thereof are formed by the down-turned member sections (2/5, 3/5), whereas the upper fork parts are formed by upwardly-extending member sections (2/6, 3/6), the underside of which ends at least at the height (H3) of a car bumper (22) and is designed so that, in the event of a rear-end collision, a car can penetrate into this thus-formed rear-side commercial vehicle crumple Zone, the crash protection bar (35) or the panelling screen (36) being displaced longitudinally until the final deformation of the energy absorber(s)(37) is reached.

26. A commercial vehicle according to claim 24, characterised in that the downwards turn of the rear longitudinal member ends (2/5, 3/5) is implemented by bending them down or by welding in an appropriate member part.

27. A commercial vehicle according to claim 25, characterised in that the rear-side bifurcation and its parts (2/5, 2/6 or 3/5, 3/6), together with the previously provided longitudinal member part (2/4, 3/4 or 2/2, 3/2) is implemented as a pressed sheet metal part or as a welded structure.

## Revendications

1. Véhicule utilitaire notamment camion à cabine avancée comprenant un châssis (1) dont le cadre se compose de deux longerons (2, 3) reliés par des traverses et équipés d'installations de protection contre l'encastrement (24, 28, 35, 36) qui sont montées de manière souple vers l'intérieur du véhicule et sont reliées à des absorbeurs d'énergie (23, 32, 37), et en cas de collision d'un véhicule de tourisme ils cèdent et dissipent l'énergie de la collision,
caractérisé en ce que
le châssis (1) du véhicule est équipé de parties de châssis (9/1 ; 2/3, 3/3, 2/5, 3/5) déplacées vers le bas sensiblement jusqu'à la hauteur (H3) d'un pare-chocs de véhicule de tourisme (22), parties de châssis munies d'absorbeurs d'énergie (23, 32, 37) prévus par des supports stables (2/5, 3/5, 9/1, 29, 30, 31) à la hauteur (H3) du pare-chocs (22) de véhicule de tourisme, pour recevoir les installations de protection à l'encastrement du véhicule (des pare-chocs avant et arrière 24, 35, 36 ainsi que les panneaux de protection contre l'encastrement, latérale 28) et en ce qu'entre les installations de protection à l'encastrement du côté avant, du côté arrière et sur les côtés latéraux (24, 28, 35, 36) et le cadre du véhicule, dans la zone de déformation, il se trouve l'absorbeur d'énergie en dehors de la zone d'extension des supports (23, 32, 37) il y ait des zones d'écrasement dans lesquelles :
- peut pénétrer un véhicule de tourisme entrant en collision,
- qui disperse l'énergie par les absorbeurs d'énergie (23, 32, 37) souples dans la ou les directions du choc et,
- aucune pièce ni composant ne sont prévus et s'ils le sont ils sont souples dans la direction du choc.

2. Véhicule utilitaire selon la revendication 1,
caractérisé en ce que
au niveau de la face avant du véhicule utilitaire, notamment dans la zone d'écrasement sous la cabine du véhicule (5), chacun des deux longerons (2, 3) du châssis présente à son extrémité avant, une fourche (9) verticale dont la partie inférieure de fourche (9/1) s'appuie à l'avant par un ou plusieurs pare-chocs (24) prévus à la hauteur (H3) d'un pare-chocs de véhicule de tourisme (22), et appuyée dans la direction longitudinale du cadre par des absorbeurs d'énergie (23) souples, appartenant à l'absorbeur d'énergie frontal (24), alors que la partie supérieure (9/2) de la fourche constitue un support pour des composants ou pièces du véhicules tels que les paliers avant de la cabine (6), la transmission de direction, le radiateur, d'autres pare-chocs ou panneaux frontaux (25) ou analogues, et se termine sensiblement à la hauteur (H2) située au-dessus du niveau normal d'un capot de moteur de véhicule de tourisme (26), et est réalisée en extrémité pour qu'un véhicule de tourisme en cas de collision, puisse pénétrer dans la zone d'écrasement avant du véhicule utilitaire en déplaçant longitudinalement le pare-chocs (24) jusqu'à la déformation finale du ou des absorbeurs d'énergie (23).

3. Véhicule utilitaire selon la revendication 2,
caractérisé en ce que
le bord inférieur de la partie supérieur de la fourche (9/2) est au moins sensiblement parallèle à la chaussée, dans la direction longitudinale, et en cas de collision avec un véhicule de tourisme cette partie assure un déplacement du pare-chocs (24) dans la direction longitudinale du châssis jusqu'à la déformation finale du ou des absorbeurs d'énergie (23).

4. Véhicule utilitaire selon l'une des revendications 2 et 3,
caractérisé en ce que
la partie inférieure (9/1) de la fourche verticale (9) de chaque longeron de châssis (2, 3) soutient l'absorbeur d'énergie (23) approprié.

5. Véhicule utilitaire selon l'une des revendications 2 et 3,
caractérisé en ce que
la partie inférieure (9/1) de la fourche verticale (9) des deux longerons (2, 3) du châssis sont reliés au niveau de leur face frontale et portent au moins approximativement sur toute leur longueur/largeur du véhicule, pour le pare-chocs (24), un absorbeur d'énergie (23) qui s'étend derrière celui-ci.

6. Véhicule utilitaire selon une ou plusieurs des revendications 2 et 5,
caractérisé en ce que
les extrémités avant des parties inférieures de fourche (9/1) des longerons (2, 3) du châssis sont reliés l'un à l'autre par une traverse (27) à laquelle sont fixés les absorbeurs d'énergie (23).

7. Véhicule utilitaire selon la revendication 2,
caractérisé en ce que
le pare-chocs (24) lui-même est un absorbeur d'énergie ou est fixé sous la forme d'une pièce préfabriquée pour le ou les absorbeurs d'énergie (23) à l'extrémité avant des parties inférieures de fourche (9/1) ou à la traverse (27) qui s'y trouve.

8. Véhicule utilitaire selon l'une des revendications 1 à 5,
caractérisé en ce que
le pare-chocs (24) comporte un renforcement transversal auquel sont reliés le ou les absorbeurs d'énergie (23).

9. Véhicule utilitaire selon la revendication 1,
caractérisé en ce que
chacun des longerons (2, 3) est subdivisé sensiblement à partir de la paroi arrière (8) de la cabine de pilotage en une partie supérieure (2/2, 3/2) et à une certaine distance, une partie inférieure de longeron (2/3, 3/3) qui sont reliées avant le dernier essieu arrière (9) ou essieu le plus avant, et extérieurement il y a chaque fois des supports (29, 30, 31) pour le panneau de protection (28) qui s'étend latéralement pour le panneau de protection (28) s'étendant entre l'essieu avant et le premier essieu arrière (12) (ou le plus proche) avec des absorbeurs d'énergie (32) soutenus et fixés.

10. Véhicule utilitaire selon l'une des revendications 2 et 9,
caractérisé en ce que
chacun des longerons (2, 3) comporte un segment de support avant (2/3, 3/3) qui ne présente que la fourche verticale avant (9) et de plus possède au niveau de l'extrémité arrière, un plan vertical (10) avec une partie supérieure de fourche (10/1) à laquelle se raccorde la partie supérieure du support de fourche (2/2, 3/2) et la partie inférieure de fourche (10/2) à laquelle ne fait suite que la partie de longeron inférieure (2/3, 3/3) est adjacente.

11. Véhicule utilitaire selon la revendication 10,
caractérisé en ce que
les fourches verticales (9, 10) sont prévues chaque fois au niveau des segments de longeron avant (2/1, 3/1), qui dans la zone comprise entre la fourche avant et la fourche arrière (9, 10), pour abaisser le groupe d'entraînement (4) et la cabine de conducteur (5) sont abaissés au moins partiellement à un niveau plus bas (H4 = 0,6-0,9 H5) que le niveau (H5) de la partie supérieure (2/3, 3/2) du longeron et le cas échéant pour former une zone d'entrée sensiblement en forme de V pour les composants, et qui est en biais par rapport à la direction verticale, comporte des bossages rentrant ou sortant pour le branchement direct d'organes d'articulation d'essieux ou de suspensions de roues indépendantes.

12. Véhicule utilitaire selon l'une des revendications 10 à 11,
caractérisé en ce que
chaque segment avant (2/1, 3/1) de longeron est réalisé sous la forme d'une pièce en tôle matricée avec la fourche avant et la fourche arrière (9, 10).

13. Véhicule utilitaire selon l'une des revendications 10 à 11,
caractérisé en ce que
chaque segment de longeron avant (2/1, 3/1) est réalisé de pièces préfabriquées selon une construction mécanosoudée.

14. Véhicule utilitaire selon l'une des revendications précédentes,
caractérisé en ce que
la partie supérieure de fourche (9/2) de la fourche avant (9) est réalisée pour la fixation de pièces ou ensembles de véhicule et/ou comporte des organes de fixation appropriés tels que des blocs de palier ou des moyens analogues.

15. Véhicule utilitaire selon la revendication 10,
caractérisé en ce que
les deux parties (2/2, 2/3 ou 3/2, 3/3) de chaque support de châssis (2, 3) dans la zone de résolution sont le plus éloignées l'une au-dessus de l'autre et sont au moins approximativement parallèles dans la direction longitudinale et à l'avant elles sont reliées à la partie de fourche (10/1, 10/2) correspondante de la fourche verticale arrière (10), sur le segment de support avant (2/1, 3/1) par les liaisons à vis ou à rivets.

16. Véhicule utilitaire selon la revendication 15,
caractérisé en ce que
les deux parties (2/2, 2/3 ; 3/2, 3/3) de chaque longeron de châssis (2, 3) s'étendent vers l'arrière jusque devant l'essieu arrière (12) (le premier ou l'essieu arrière le plus à l'avant) et le châssis (1) est complété vers l'arrière par des extrémités raccordées aux parties supérieures de longeron (2/2, 3/2), par des parties de longeron (2/4, 2/5, 2/6, 3/4, 3/5, 3/6), au moins reliées par une traverse (14).

17. Véhicule utilitaire selon la revendication 15,
caractérisé en ce que
la partie supérieure (2/2, 3/2) de chaque longeron de châssis (2, 3) s'étend au delà de l'essieu arrière (12) alors que la partie inférieure (2/3, 3/3) des longerons se termine chaque fois avant l'essieu arrière (9) (premier essieu, essieu le plus à l'avant) et y est reliée par un panneau de palier servant à l'articulation des organes de suspension des roues arrière à la partie supérieure de longeron (2/2, 3/2).

18. Véhicule utilitaire selon l'une des revendications 16 et 17,
caractérisé en ce que
les deux parties (2/2, 2/3, 3/2, 3/3) de chaque longeron de châssis (2, 3) présentent des sections différentes et les sections les plus fortes sont au choix la section inférieure ou la section supérieure.

19. Véhicule utilitaire selon l'une des revendications 16 et 17,
caractérisé en ce que
les deux parties (2/2, 3/2 3/2, 3/3) de chaque longeron (2,3) du châssis présentent une même section.

20. Véhicule utilitaire selon l'une des revendications 9, 10 et 15 à 19,
caractérisé en ce que
les panneaux de protection contre l'encastrement (28) latéraux, sont chaque fois soutenus par des parties supérieures (29) de longerons (2/2, 3/2) supérieurs, en étant fixés et les supports inférieurs (29, 30) sur lesquels sont fixés de manière soutenue les supports longitudinaux inférieurs (2/3, 3/3), comportent les supports (29, 30) en forme de tiges, en saillie latéralement munis chaque fois d'absorbeurs d'énergie (32).

21. Véhicule utilitaire selon l'une des revendications 9, 10 et 15 à 19,
caractérisé en ce que
les panneaux de protection latéraux (28) sont formés chaque fois d'un châssis fermé, prévu verticalement avec sa base sur les parties respectives (2/2, 2/3, 3/2, 3/3) de longeron (2, 3) du châssis, avec des supports étagés et portant respectivement des absorbeurs d'énergie (32).

22. Véhicule utilitaire selon l'une des revendications 20 et 21,
caractérisé en ce que
chaque panneau de protection contre l'encastrement (28), prévu sur les grands côtés du véhicule sont également réalisés avec un habillage avantageux sur le plan aérodynamique pour le véhicule.

23. Véhicule utilitaire selon l'une des revendications 20 à 22,
caractérisé en ce que
dans l'intervalle compris entre les panneaux de protection contre l'encastrement (28) et les parties de longeron (2/2, 2/3 ou 3/2, 3/3) qui les portent, poussées vers ce panneau, il y a une zone qui n'est pas déformable (29, 30, 31) pour les parties de véhicule (30) telles que les réservoirs de carburant et d'air, les caissons à batterie, les caissons de rangement et les moyens analogues qui sont ainsi montées de manière protégée.

24. Véhicule utilitaire selon l'une des revendications 16 et 17,
caractérisé en ce que
les extrémités arrière des segments de longeron arrière (2/4, 3/4) sont abaissées jusqu'à la hauteur (H3) d'un pare-chocs de véhicule de tourisme et en ce qu'aux extrémités arrière de ces segments (2/5, 3/5) de longeron, abaissées, il y a un longeron anticollision (35) ou panneau d'habillage (36), aérodynamique entourant la partie arrière et s'appuyant par au moins un absorbeur d'énergie (37), souple dans la direction longitudinale, et lors d'une collision du véhicule de tourisme, celui-ci peut pénétrer dans la zone d'écrasement du véhicule utilitaire, arrière, ainsi conçue, et peut dissiper l'énergie de la collision par le ou les absorbeurs d'énergie (37).

25. Véhicule utilitaire selon la revendication 24,
caractérisé en ce que
les extrémités arrière des segments de longeron (2/4, 3/4), arrière ou de parties de poutre longitudinales (2/2, 3/2), munies de fourches, la partie inférieure de fourche est formée par les segments de poutre abaissés (2/5, 3/5), les parties de fourche supérieures sont par contre constituées par des segments de support relevés (2/6, 3/6) et dont la face inférieure se termine au moins à la hauteur (H3) d'un pare-chocs de véhicule de tourisme (22) conçu pour qu'en cas de choc arrière, le véhicule de tourisme puisse pénétrer en déplaçant longitudinalement le longeron de châssis (35) ou le panneau d'habillage (36), jusqu'à la déformation finale du ou des absorbeurs d'énergie (37) en permettant au véhicule de pénétrer dans cette zone d'écrasement arrière du véhicule utilitaire.

26. Véhicule utilitaire selon la revendication 24,
caractérisé en ce que
l'abaissement des extrémités arrière des longerons (2/5, 3/5) est réalisable par cintrage des poutres ou en soudant une pièce de support appropriée.

27. Véhicule utilitaire selon la revendication 25,
caractérisé en ce que
la fourche arrière et ses parties (2/5, 2/6 ou 3/5, 3/6) ainsi que la partie de longeron (2/4, 3/4 ou 2/2, 3/2) données précédemment sont des pièces en tôle comprimée ou en construction mécanosoudée.
